Europäisches Patentamt

(19) European Patent Office

Office européen des brevets

(11) Publication number: **0 144 499**
**A2**

(12) # EUROPEAN PATENT APPLICATION

(21) Application number: **84106891.9**

(22) Date of filing: **15.06.84**

(51) Int. Cl.⁴: **A 01 K 13/00**

(30) Priority: **12.12.83 JP 191233/83 U**

(43) Date of publication of application:
**19.06.85 Bulletin 85/25**

(84) Designated Contracting States:
**DE FR GB IT**

(71) Applicant: **Ishihara, Masamitsu**
**628 Hirai Kannami-cho**
**Tagata-gun Shizuoka-ken(JP)**

(72) Inventor: **Ishihara, Masamitsu**
**628 Hirai Kannami-cho**
**Tagata-gun Shizuoka-ken(JP)**

(74) Representative: **Ruschke, Hans Edvard et al,**
**Patentanwälte Dipl.-Ing. Olaf Ruschke Dipl.-Ing. Hans E.**
**Ruschke Dipl,-Ing. Jürgen Rost Dipl.-Chem. Dr. U. Rotter**
**Pienzenauerstrasse 2**
**D-8000 München 80(DE)**

(54) **Pet drier.**

(57) A pet drier which comprises a warm air generator (7)
which attaches to a partly or wholly transparent, soft fiber
bag (1) that provides for the extraction of air and into which
the pet is inserted through an opening which may be closed
in such a way that the pet's head remains outside.

F I G. 1

- 1 -

## Pet drier

This invention relates to a drier for drying the wet body of a pet such as a dog or a cat.

This invention is intended to provide a pet drier with a simple arrangement.

To attain the above-mentioned objective, the invention provides a pet drier which comprises a warm air generator and an air permeable bag made of soft fibers into which the pet may be inserted in such a way that its head remains outside.

This invention can be more fully understood from the following detailed description when taken in conjunction with the accompanying drawings, in which:

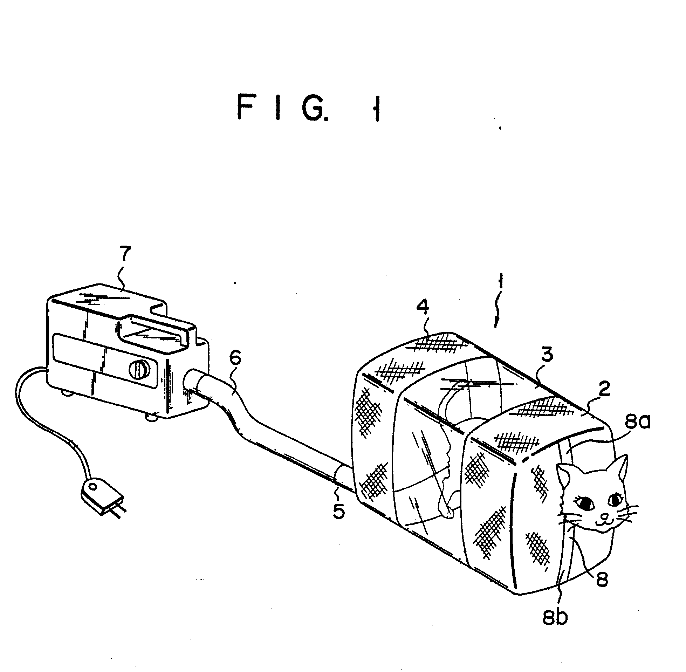

Fig. 1 is an oblique view of a pet drier embodying this invention which is being operated.

A description may now be made with the accompanying drawing of a pet drier embodying this invention. Fig. 1 shows a bag 1 which is in part air-permeable and which is made of soft fibers. The bag 1 may be folded into a compact form when not in use. The bag 1 consists of front and rear sections 2, 4 and a central section 3. The front and rear sections 2, 4 are made of a material, for example nylon, whose fibers are relatively coarsely to permit air to pass through. The central section 3 is made of a transparent material, for example, synthetic resin film. A connector 5 is attached to the rear section 4 and joins to a hose 6 which connects the bag 1 to a warm air generator 7. When warm air is blown in, the bag 1 inflates. A vertical opening 8 is provided in the center of the front face of the front section 2, this opening 8 is provided with a sliding clip 8a at the top and a second sliding clip 8b at the bottom, either or both of which may be used to close or open the opening 8. The warm air generator 7 may consist of the known type containing a heater and fan, preferably fitted with a thermostat.

The subject pet drier is operated in the following manner. The warm air generator 7 is coupled to the connector 5 by means of the hose 6 and blows warm air into the bag 1, causing it to inflate. After the opening 8 has been opened, the pet is inserted into the bag 1 and both sliding clips 8a, 8b are used to close the opening 8 as far as the pet's neck so that its head remains outside the bag 1, as shown in Fig. 1, the body of the pet is dried by the continuous conduction of warm air through the bag 1. The air-permeable front and rear sections 2, 4 act as filters and prevent hair which is loosened from the pet from passing outside. Since the pet's head is outside the bag 1, the pet can be dried without experiencing any discomfort. The transparent central section 3 permits the operator to observe the drying process.

In the foregoing embodiment, the warm air generator 7 is joined to the connector 5 of the bag 1 by means of the hose 6. However, the warm air generator 7 may be directly coupled to the connector 5 of the bag 1.

Furthermore the composition of the central section 3 and of the front and rear sections 2, 4 of the bag 1 may be inverted. It is also possible to provide the bag 1 with an air extraction vent fitted with a filter, in which case none of the three sections of the bag 1 need be air-permeable.

Ribs may also be provided in the bag 1 so that it will inflate into a prescribed form.

Claims:

1. A pet drier comprising:

a bag (1) which is made of soft fibers and which provides for the induction and extraction of warm air, and which is provided with; a closable opening in the front face of the bag (1) to allow for the insertion of a pet; and

a connector (5) attached to the rear section (4) of the bag (1) to allow the coupling of a warm air generator (7), either directly or by means of a hose (6).

2. The pet drier according to claim 1, characterized in that part or all of the bag (1) is formed of a transparent film.

3. The pet drier according to claim 1, characterized in that the opneing in the bag (1) is vertical and equipped with two sliding clips (8a, 8b) which are used to close the opening as far as the pet's neck so that its head remains outside the bag (1).

F I G. 1